# EUROPÄISCHE PATENTSCHRIFT

(11) **EP 1 497 010 B1**
(45) Veröffentlichungstag und Bekanntmachung des Hinweises auf die Patenterteilung: **03.01.2007**
(21) Anmeldenummer: 03729936.9
(22) Anmeldetag: 23.04.2003
(51) Int. Cl.: B01D 21/24

(54) **VERFAHREN UND VORRICHTUNG ZUR SCHWERSTOFFABTRENNUNG**
METHOD AND DEVICE FOR SEPARATING OUT DENSE MATERIALS
PROCEDE ET DISPOSITIF DE SEPARATION DE PARTICULES LOURDES

(30) Priorität: 25.04.2002 DE 10218377
(43) Veröffentlichungstag der Anmeldung: 19.01.2005
(73) Patentinhaber: REA GESELLSCHAFT FÜR RECYCLING VON ENERGIE UND ABFALL MBH, 80333 München (DE)
(72) Erfinder: KÜBLER, Hans, 80333 München (DE)
(74) Vertreter: Zipse + Habersack
(86) Internationale Anmeldenummer: PCT/EP2003/004223
(87) Internationale Veröffentlichungsnummer: WO 2003/090894

(56) Entgegenhaltungen:
- DE-B- 1 118 107
- DE-B- 1 250 373
- FR-A- 1 516 848
- FR-A- 2 226 198
- FR-A- 2 666 026
- US-A- 5 476 583

## Beschreibung

Die Erfindung betrifft ein Verfahren und eine Vorrichtung zur Schwerstoffabtrennung aus Aufschlämmungen.

Bei der nassmechanischen Aufbereitung von Stoffgemischen, z.B. von Abfällen, entstehen Aufschlämmungen wie Pulpen bzw. Suspensionen, die noch relevante Anteile an sedimentierbaren Stoffen enthalten.

Kommunale Bioabfälle enthalten bspw. relevante Mengen an mineralischen Schwerstoffen wie Steine, Glasscherben, Split oder Kies bzw. Sand, die gemäß den Untersuchungen von Kranert et al. (Kranert, M., Hartmann A., Graul S. (1999) Determination of sand content in digestate. In: Bidlingmaier W et al. (Hrsg) Proceedings of the International Conference ORBIT 99 on Biological Treatment of Waste and the Environment, Part I, P. 313-318) einen Anteil an der Trockenmasse des Abfalls von teilweise über 25 Gew.% ausmachen können. Ein wesentlicher Teil dieser mineralischen Schwerstoffe wird bei einer nassmechanischen Aufbereitung der Bioabfälle in die Pulpe eingetragen, die dann der biologischen Verwertung zugeführt wird.

Untersuchungen von Kübler et al. (Kübler, H., Nimmrichter, R., Hoppenheidt, K., Hirsch, P., Kottmair, A., Nordsieck, H., Swerev, M., Mücke, W. (1998) Full scale co-digestion of biowaste and commercial organic waste. In: Proceedings of MER 5 Materials and Energy from Refuse 12-14 October 1998, Oostende, Belgium, P. 195-202) zeigen, dass bei der nassmechanischen Aufbereitung von Bioabfällen eine Pulpe entsteht, aus der eine hydrodynamische Schwerstoffabscheidung noch ca. 3 Gew.% der Feuchtmasse des behandelten Abfalls als Schwerstoffe abtrennt.

Bei der weiteren Verarbeitung der Pulpe bzw. Suspension stellen leicht sedimentierende Stoffe ein Problem dar, da sie:
einerseits in Behältern zu Sedimenten führen als auch Rohrleitungen verlegen und
andererseits durch ihre meist abrasiven Materialeigenschaften zu starkem Verschleiß der Maschinentechnik beitragen.

Um eine störungsarme Verwertung der Suspensionen aus der Nassaufbereitung sicherzustellen, müssen die leicht sedimentierbaren Anteile aus der Suspension abgetrennt werden. Hierzu werden Schwerstoffabscheider eingesetzt.

Die DE 195 05 073 A1 beschreibt einen Flachbodenhydrozyklon zur Abtrennung von Schwerstoffen aus einer Aufschlämmung, die aus Abfallstoffen erzeugt wurde. Durch die Kombination von Flachbodenzyklon und Klassierrohr hat ein derartiger Schwerstoffabscheider eine höhere Selektivität, aber einen geringeren Wirkungsgrad.

Ein Verfahren zum Nassklassieren ist in der DE 42 14 771 A1 beschrieben. Die Abtrennung von Sand und anderen Verunreinigungen aus kompostierten Abfällen ist in der EP 0 678 085 B1 gezeigt.

Die DE 34 44 329 C2 beschreibt eine Anlage zur Aufbereitung von Schlämmen unter dem Einsatz von zwei Schwerstoffabscheidern und mehreren Vorlagebehältern.

In der DE 41 15 920 A1 ist ein Verfahren zur Schwerstoffabtrennung ohne Rückführung der Flüssigphase beschrieben. Ein weiteres Verfahren zur Schwerstoffabtrennung ohne Rückführung der Flüssigphase und ohne Vorlagebehälter ist in der EPa 86201987.4 dargestellt. Um allgemein die Schwerstoffabtrennung aus der Suspension von einer vorgeschalteten Aufbereitung des Ausgangsstoffgemisches zu entkoppeln, wird die Suspension üblicherweise in einem Vorlagebehälter zwischengespeichert und aus diesem Behälter wird die Schwerstoffabscheidung beschickt. Der dabei anfallende Ablauf der Schwerstoffabtrennung, die gereinigte Suspension, wird entweder vollständig den nachgeschalteten Verfahrensstufen zugeführt oder sie wird teilweise zurückgeführt und erneut der Schwerstoffabscheidung zugeführt, um den Abscheidungsgrad zu verbessern.

Eine Vorrichtung zur Schwerstoffabscheidung, die sehr verbreitet ist und in der DE 195 05 073 A1 beschrieben ist, erfordert einen freien Ablauf der gereinigten Suspension. Dazu sind kurze Ablaufleitungen ohne Verzweigungen erforderlich. Folglich bestehen zur Rückführung der gereinigten Suspension vorrangig zwei verfahrenstechnische Lösungen. Der Ablauf der Schwerstoffabtrennung wird:
a) entweder, wie in der WO 90/11144 dargestellt ist, in den Vorlagebehälter zurückgeführt, aus dem auch die nachgeschalteten Verfahrensstufen beschickt wird,
b) oder in einem weiteren, nachgeschalteten Behälter zwischengespeichert und aus diesem zur Schwerstoffabscheidung zurückgeführt oder einer zweiten Einrichtung zur Schwerstoffabscheidung zugeführt, wie in der DE 34 44 329 C2 beschrieben ist.

Die Lösung a) hat den Nachteil, dass ein Teil der ursprünglichen schwerstoffbelasteten Suspension direkt den nachgeschalteten Verfahrensstufen zugeführt wird, ohne zuvor der Schwerstoffabscheidung zugeführt worden zu sein. Dies verursacht einen höheren Eintrag von leicht sedimentierenden Stoffen in die anschließenden Prozessstufen mit den oben beschriebenen Nachteilen.

Die Lösung b) erfordert einen zweiten, zusätzlichen Behälter. Sie verursacht ferner einen größeren Flächenbedarf, längere Rohrleitungen, eine größere Anzahl von Armaturen und einen höheren steuerungstechnischen Aufwand. Höhere Investitionskosten sind die Folge.

Aus FR-A- 2 226 198 ist bekannt, eine zu reinigende Suspension in einem ersten Behälter vorzureinigen und den gereinigten Überlauf, der noch feine Schwebstoffe enthält, in ein erstes Abteil eines nachgeordneten Zwischenbehälters zu überführen, von wo die vorgereinigte Suspension in einen Schwebstoffabscheider (Hydrozyklon) abgezogen wird. Die im Schwebstoffabscheider abgetrennte Schwebstoff-Fraktion wird in den ersten Behälter und das abgetrennte reine Wasser wird in ein zweites Abteil des Zwischenbehälters zurückgeführt, welches Abteil durch eine Trennwand bzw. Barriere vom ersten Abteil abgetrennt, aber über eine Öffnung im Bodenbereich mit diesem verbunden ist. Reines Wasser wird aus dem Abteil abgezogen. Die Stoffströme sind so gewählt, dass reines Wasser vom zweiten ins erste Abteil fließen kann, aber nicht umgekehrt Suspension aus dem ersten Abteil sich mit dem reinen Wasser im zweiten Abteil vermischen kann. Der Zwischenbehälter dient als Puffer, eine Nachreinigung findet in diesem nicht statt.

Gemäß FR-A-2 666 026 wird eine vorgereinigte Suspension aus einem Erstbehälter in einen Klärbehälter überführt. In diesem Klärbehälter setzt sich die Suspension ab und die abgesetzte Suspension wird zur weiteren Trennung in einen Abscheider (Hydrozyklon) gebracht. Die flüssige Phase aus diesem Abscheider wird in den Klärbehälter zurückgeführt, dort in ein abgetrenntes Abteil, das über ein Ventil in den Klärbehälter mündet. Sowohl aus dem Klärbehälter über einen ersten Siphon als auch aus dem Abteil über einen zweiten Siphon wird geklärtes Wasser in Leitungen zu nachfolgenden Prozessstufen abgegeben. Das Ventil am unteren Ende des Abteils wird geöffnet, wenn der Füllstand im Klärbehälter unter ein bestimmtes Niveau abgesunken ist, wodurch eine Vermischung mit der vorgereinigten Suspension und eine Rezirkulation über den Abscheider erfolgt.

Der Erfindung liegt die Aufgabe zugrunde, ein Verfahren und eine Vorrichtung zur Schwerstoffabtrennung aus Aufschlämmungen vorzuschlagen, mit denen mit geringem apparativen Aufwand die Schwerstoffbelastung nachfolgender Prozessstufen vermindert werden kann.

Diese Aufgabe wird hinsichtlich des Verfahrens mit einem Verfahren mit den Merkmalen von Anspruch 8 und hinsichtlich der Vorrichtung mit einer Vorrichtung mit den Merkmalen von Anspruch 1 gelöst.

Vorteilhafte Ausgestaltungen der Erfindung sind in den Unteransprüchen aufgezeigt.

Das erfindungsgemäße Verfahren umfasst im Wesentlichen die folgenden Schritte: Einleiten der schwerstoffreichen ungereinigten Suspension in einen Behälter, Abführen einer schwerstoffhaltigen Suspension aus dem Behälter und Zuführen der abgeführten Suspension in eine Schwerstoffabscheidung, Rückführen einer schwerstoffarmen gereinigten Suspension aus der Schwerstoffabscheidung zurück zu dem Behälter, um diesen unter teilweiser räumlicher Trennung von der ungereinigten Suspension und unter weiterer Schwerstoffabtrennung zu durchströmen, Abziehen eines im Wesentlichen schwerstofffreien Suspensionsstroms quer zur Hauptströmungsrichtung der schwerstoffarmen Suspension in dem Behälter, Abführen eines verbleibenden Teilstroms schwerstoffarmer Suspension vermischt mit dem ungereinigten Stoffstrom aus dem Behälter und Zuführen dieses Stoffstroms zu der Schwerstoffabscheidung.

Zur Steigerung der Abtrennleistung wird die Suspension 4 mehrfach der Schwerstoffabtrennung zugeführt und dabei ein Kurzschlussstrom von ungereinigter Suspension 3 zu den nachgeschalteten Verfahrensstufen verhindert, indem ein Materialstrom nur aus der Zone mit gereinigtem Material 8 in die Zone mit ungereinigtem Material 10 möglich ist

Die den nachfolgenden Verfahrensstufen zugeführte nahezu schwerstofffreie Suspension wird durch Abzug eines Suspensionsanteils aus der Hauptströmung der aus der Schwerstoffabscheidung rückgeführten Suspension erhalten, wobei Abscheide- und Auftrenneffekte in der Hauptströmung der schwerstoffarmen Suspension beim Durchströmen des Behälters auftreten und der Abzug in Querrichtung zur Hauptströmung dazu führt, dass der quer abgezogene Suspensionsstrom im Wesentlichen von Schwerstoffen befreit ist.

Nachfolgend wird die Erfindung anhand von Ausführungsbeispielen und Modifikationen davon unter Bezugnahme auf die Zeichnung näher erläutert:

Es zeigen:
Fig. 1 eine schematische Darstellung des Vorlagebehälters, der mit einer Schwerstoffabscheidung verbunden ist;
Fig. 2 eine Draufsicht auf den oben offen gezeigten Vorlagebehälter aus Fig. 1 zur Darstellung der Trennwandgestaltung;
Fig. 3 eine schematische Darstellung eines nicht erfindungsgemäßen alternativ gestalteten Vorlagebehälters;
Fig. 4 eine Draufsicht auf den oben offen gezeigten Vorlagebehälter aus Fig. 3 zur Darstellung der Trennwandgestaltung;
Fig. 5 eine schematische Darstellung eines nicht erfindungsgemäßen alternativ gestalteten Vorlagebehälters; und
Fig. 6 eine Draufsicht auf den oben offen gezeigten Vorlagebehälter aus Fig. 5 zur Darstellung der Trennwandgestaltung.

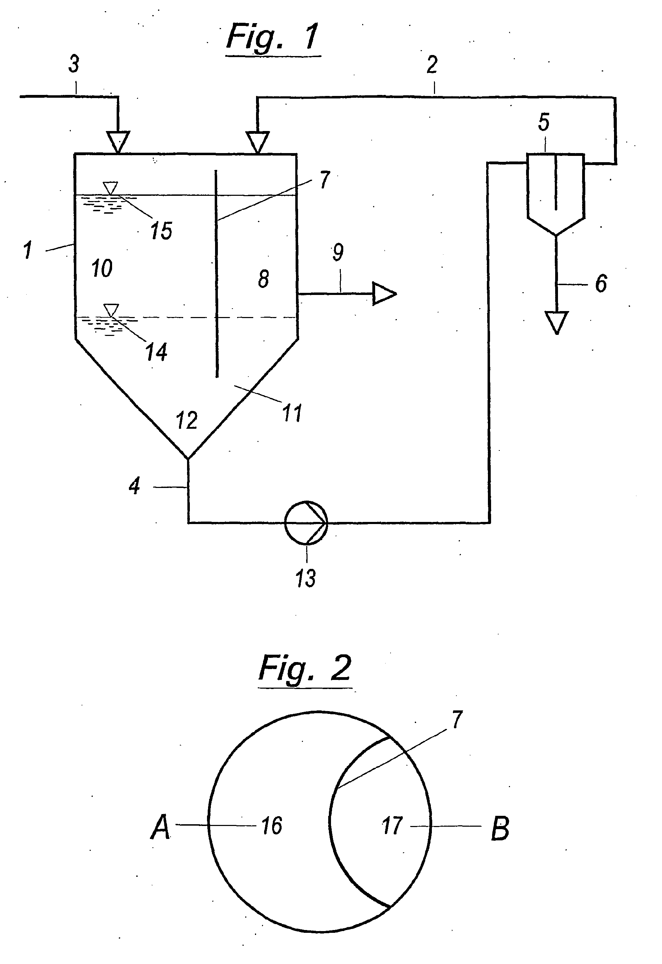

Eine Schwerstoffabtrennung, wie in Fig. 1 gezeigt, verwendet einen Vorlagebehälter 1, der so gestaltet ist und so beschickt wird, dass eine Rückvermischung der aus einer Schwerstoffabscheidung rückgeführten, gereinigten Suspension 2 mit der ungereinigten, schwerstoffreichen Suspension 3 stattfindet. Der Vorlagebehälter 1 hat vier Anschlüsse, einen Zulauf für ungereinigte Suspension 3, einen Zulauf für gereinigte Suspension 2, einen Ablauf in einer unteren Zone 12, in der Suspension 4 als ein Gemisch ungereinigter Suspension und eines Rests gereinigter Suspension abgezogen und einer Schwerstoffabtrennung zugeführt wird und einen Ablauf im Bereich der Zone mit gereinigtem Material 8, aus dem das gereinigte Material 9 quer zur Hauptströmungsrichtung der gereinigten Suspension 2 abgezogen wird.

Aus dem Vorlagebehälter 1 wird die schwerstoffhaltige Suspension 4 im Bodenbereich 12 abgezogen und der Schwerstoffabtrennung 5 zugeführt. Aus der Schwerstoffabtrennung wird der Ablauf 2 der Schwerstoffabtrennung in den Vorlagebehälter 1 in dessen Bereich 8 zurückgeführt und die abgetrennten Schwerstoffe 6 werden aus der Schwerstoffabtrennung ausgeschleust.

Zur Vermeidung einer Rückvermischung des gereinigten Materials 2 mit noch nicht gereinigtem Material 3, das bereits im Vorlagebehälter, nachfolgend Behälter 1, im entsprechenden Bereich 10 vorliegt, ist der Behälter 1 mit einer Trennwand 7 ausgerüstet. Die Trennwand 7 teilt den Behälter 1 in zwei Bereiche 8 und 10, die beide einen Abfluss des Materials zur Beschickungsvorrichtung 13 der Schwerstoffabtrennung 5 zulassen. Aus dem Bereich 8, dem das gereinigte Material zugeführt wird, wird das gereinigte Material 9 zur Beschickung der nachgeschalteten Verfahrensstufen in Querrichtung, d.h. horizontaler Richtung, zur senkrechten Hauptströmungsrichtung der gereinigten Suspension in der Zone 8 entnommen.

Um ferner einen Zufluss von ungereinigtem Material in den Bereich des gereinigten Materials 8 zu verhindern, ist die Trennwand 7 so angeordnet, dass bei maximalem Zufluss von ungereinigtem Material 3 und bei minimaler Rückführung von gereinigtem Material 2 im Bereich des Ablaufs 11 aus der Zone mit gereinigtem Material 8 in die Zone mit ungereinigtem Material 10 immer ein hydrostatisches Druckgefälle von der Zone mit gereinigtem Material 8 in die Zone mit ungereinigtem Material 10 herrscht. Dies wird durch die Festlegung des Verhältnisses der Querschnittsflächen auf den beiden Seiten der Trennwand erreicht. Das Verhältnis der beiden Querschnittsflächen wird so gewählt, dass bei virtuell geschlossenem Ablauf 11 aus der Zone mit gereinigtem Material 8 in die Zone mit ungereinigtem Material 10 und maximalem Zufluss von ungereinigtem Material 3 sowie minimaler Rückführung der Suspension aus der Schwerstoffabscheidung 2 der Füllstand im Bereich mit gereinigtem Material 8 schneller oder zumindest gleich schnell steigt wie der Füllstand im Bereich mit ungereinigtem Material 10. Mit anderen Worten, die Stoffströme 2, 3, 4 und 9 sind so abgestimmt, dass sich stets eine Strömung von der Zone 8 durch die Öffnung 11 in die Zone 10 einstellt.

Dies hat bei offenem Ablauf 11 zur Folge, dass während der Beschickung des Schwerstoffabscheiders 5 immer Material aus dem Bereich mit gereinigtem Material 8 in den Bereich mit ungereinigtem Material 10 fließt. Aus diesem Grund kann kein ungereinigtes Material in den Bereich gereinigten Materials 8 gelangen, aus dem Material 9 für die nachgeschalteten Verfahrensstufen abgezogen wird.

Die Zone mit gereinigtem Material 8 ist zudem derart ausgeführt, dass eine weitere Abtrennung der verbliebenen Schwerstoffe aus der Suspension 2 im Verlauf der Durchströmung dieser Zone erfolgt und die hier abgetrennten Schwerstoffe wieder der Zone mit ungereinigtem Material 10 zugeführt werden. Die weitere Abtrennung der Schwerstoffe in der Zone mit gereinigtem Material 8 kann durch Sedimentation oder durch Abzug des gereinigten Materials 9 im Querstrom zum vertikalen Strom der Rückführung in die Zone mit ungereinigtem Material 10 erfolgen.

Gemäß der Erfindung ist der Stoffstrom des gereinigten Materials für die nachgeschalteten Verfahrensstufen 9, der aus der Zone mit gereinigtem Material 8 entnommen wird, nur ein vergleichsweise kleiner Teilstrom der Rückführung von gereinigtem Material 2 in den Behälter. Ferner ist der Stoffstrom in der Zone mit gereinigtem Material 8 im Wesentlichen vertikal nach unten und in die Zone mit ungereinigtem Material 10 gerichtet. Der Stoffstrom des gereinigten Materials für die nachgeschalteten Verfahrensstufen 9 wird quer zu dem im Wesentlichen vertikalen Strömungsprofil abgezogen. Dadurch werden Schwerstoffe, die in der gereinigten Suspension 2 verblieben sind, zum großen Teil in die Zone mit ungereinigtem Material 10 gefördert.

Nach der Erfindung ist die Zone mit gereinigtem Material 8 im Bereich des unteren Endes mit einem offenen Durchtritt als der Ablauf 11 in die Zone mit ungereinigtem Material ausgestattet. Das hat den Vorteil, dass auf beiden Seiten der Trennwand 7 immer ungefähr die gleichen hydrostatischen Drücke herrschen und somit die statische Belastung der Trennwand 7 minimiert wird. Der offene Durchtritt kann auch dadurch erreicht werden, dass das untere Ende der Trennwand von der zugehörigen Behälterwandung beabstandet ist, dadurch wird die Bildung von Kanten vermieden, die zur Ablagerung von Schwerstoffen daran führen könnten. Durch diese Anordnung wird der Transfer von Schwerstoffen aus der Zone mit gereinigtem Material 8 in den Bereich mit ungereinigtem Material 10 somit begünstigt. Der Abzug des gereinigten Materials für die nachgeschalteten Verfahrensstufen 9 ist oberhalb der als Ablauf dienenden Öffnung 11 angeordnet.

In einer bevorzugten Ausführung ist der Querschnitt der Öffnung 11 kreis- oder ellipsenförmig und weist keine spitzen Winkel auf (Fig. 2).

Die Zufuhr der ungereinigten Suspension 3 ist derart angeordnet, dass eine Anreicherung der leicht sedimentierenden Stoffe im Bereich des Abzugs zur Schwerstoffabscheidung 12 begünstigt und eine Anströmung der Öffnung 11 zur Zone mit gereinigter Suspension 8 vermieden wird. Dies bedeutet, dass auch kein zusätzlicher dynamischer Druck vorliegt, der Suspension aus der Zone mit ungereinigtem Material 10 in die Zone mit gereinigtem Material 8 pressen könnte.

### Ausführungsbeispiele

### Beispiel 1 zu Fig. 1 und Fig. 2:

### Rahmenbedingungen:

Eine nassmechanische Aufbereitung von Abfällen mit einem Abfall-Pulper liefert einen diskontinuierlichen Anfall an schwerstoffbelasteter Pulpe. Bei Anfall schwankt der Stoffstrom der anfallenden Pulpe 3 zwischen 30 und 160 m³/h. Die mittlere Pulpeproduktion beträgt ca. 20 m³/h.

### Auslegung (siehe Fig. 1):

Der Schwerstoffabscheider 5 zur Reinigung der schwerstoffbelasteten Pulpe wird mittels Pumpe 13 kontinuierlich beschickt und hat eine variable Durchsatzleistung von 100 bis 130 m³/h. Als Vorlagebehälter kommt ein runder Behälter 1 mit steilem konischem Unterteil und einem Nutzvolumen von 30 m³ zum Einsatz. Der zylindrische Bereich des Behälters hat einen Innendurchmesser von 2,986 m (Querschnittsfläche: 7 m²). Der Abzug der Pulpe zur Schwerstoffabscheidung 5 erfolgt im unteren Bereich des Konus 12. Der minimale Füllstand 14 im Vorlagebehälter 1 ist oberhalb des Konus im zylindrischen Teil des Behälters; in diesem Bereich erfolgt auch der Abzug der gereinigten Pulpe 9 für die nachgeschalteten Verfahrensstufen. Der Abzug 9 erfolgt waagerecht und kontinuierlich mit 20 m³/h.

Der Stoffstrom 6 der abgetrennten Schwerstoffe ist im Vergleich zum Stoffstrom 4 der Zufuhr zum Schwerstoffabscheider sehr klein, so dass in erster Näherung der Stoffstrom 2 des zurückgeführten gereinigten Materials gleich dem Stoffstrom 4 gesetzt werden kann.

### Ausführung:

Der Abzug von 20 m³/h erfolgt in horizontaler Richtung quer zu dem vertikal gerichteten Stoffstrom aus der Zone mit gereinigtem Material 8, der mit 80 bis 110 m³/h in die Zone mit ungereinigtem Material 10 strömt.

Die vertikale Trennwand 7 beginnt oberhalb des maximalen Behälterfüllstands 15 von 30 m³ und reicht bis in den konischen Teil des Behälters hinab. Die Trennwand 7 unterteilt die Querschnittsfläche des zylindrischen Behälterabschnitts (siehe Fig. 2) in eine Fläche A (16) und eine Fläche B (17). Der Zone mit der Querschnittsfläche A (16) wird die ungereinigte Pulpe zugeführt und in die Zone mit der Querschnittsfläche B (17) wird der Ablauf der Schwerstoffabscheidung rückgeführt.

Um bei virtuell geschlossenem Ablauf 11 sicherzustellen, dass bei dem Abzug 9 von 20 m³/h und der minimalen Rückführung 2 von 100 m³/h der Füllstand in der Zone 8 mit der Querschnittsfläche B, in der sich die gereinigte Pulpe befindet, schneller als oder zumindest gleich schnell steigt wie im Bereich mit ungereinigter Pulpe (Zone mit der Querschnittsfläche A) bei maximaler Zufuhr 3 von 160 m³/h, gilt für das Verhältnis der beiden Querschnittsflächen: A/B > 2 (A zu B ist größer gleich zwei). In diesem Fall wird die vertikale Trennwand 7 derart eingebaut, dass sich eine Querschnittsfläche A (16) von 5 m² und eine Querschnittsfläche B (17) von 2 m² ergibt.

Die Trennwand 7 ist nach unten soweit in den Behälterkonus gezogen, dass der freie Querschnitt der Öffnung 11 zum Abfluss von gereinigter Pulpe in den Behälterkonus 0,05 m² beträgt.

Die Zufuhr der ungereinigten Pulpe 3 als auch die Rückführung 2 des Ablaufs der Schwerstoffabscheidung 5 in den Vorlagebehälter 1 erfolgt von oben. Die Zufuhr der ungereinigten Pulpe 3 erfolgt parallel und in der Nähe der vertikal verlaufenden Trennwand 7, um im Bereich des Trennwandendes eine abwärtsgerichtete Strömung sicherzustellen.

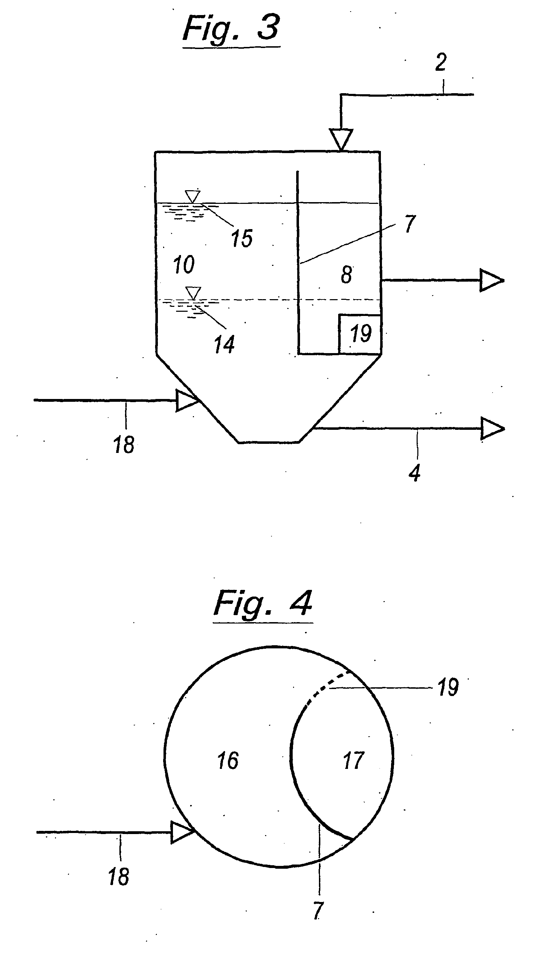

### nicht erfindungsgemäßes Beispiel 2 (Fig. 3 und Fig. 4) :

Rahmenbedingungen sowie die Ausführung und Gestaltung der Trennwand und der Flächenverhältnisse wie im Beispiel 1. Die Rückführung des Ablaufs 2 der Schwerstoffabscheidung (nicht gezeigt) in den Vorlagebehälter 1 erfolgt von oben, jedoch wird die ungereinigte Pulpe 18 unterhalb der Trennwand tangential in den Konus geleitet. Diese tangentiale Einströmung begünstigt durch die entstehende Wirbelströmung die Abtrennung der leicht sedimentierenden Schwerstoffe.

Die Trennwand 7 ist nach unten nicht soweit in den Behälterkonus gezogen wie im obigen Beispiel 1. Die Öffnung 19 zum Abfluss von gereinigter Pulpe in den Behälterkonus ist horizontal orientiert und bezüglich der tangentialen Strömung im Konus auf der Seite der Trennwand angeordnet, die der Strömung abgewandt ist, wie in Fig. 4 gezeigt ist. Der freie Querschnitt der Öffnung 19 beträgt 0,2 m².

Die gereinigte Suspension 9 für die nachfolgenden Verfahrensstufen wird, wie im Beispiel 1 schon beschrieben ist, horizontal aus der Zone 8 abgezogen. Dabei verläuft die Hauptströmung in der Zone 8 vertikal.

Der Abzug des Suspensionsgemischs 4 aus ungereinigter Pulpe und gereinigter Suspension aus der Zone 8 zum Schwerstoffabscheider (nicht dargestellt) erfolgt nicht an der Konusspitze sondern waagrecht oberhalb des Konusendes. Damit wird ein Verlegen der Öffnung durch sedimentierte Schwerstoffe vermieden.

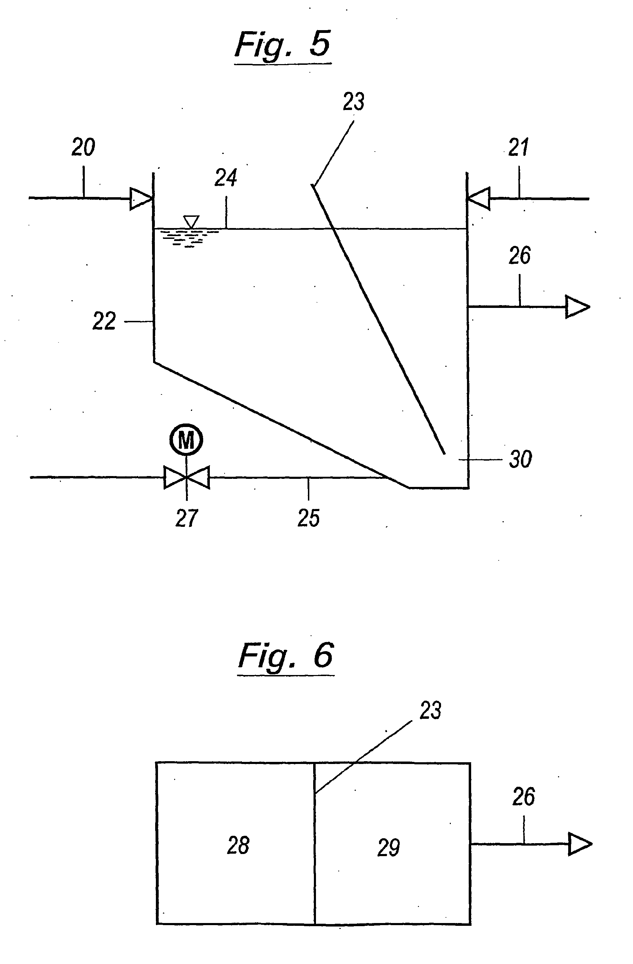

### nicht erfindungsgemäßes Beispiel 3 (Fig. 5 und Fig. 6) :

### Rahmenbedingungen:

Eine Aufschlämmung von Abfällen liefert einen kontinuierlichen Anfall an schwerstoffbelasteter Suspension mit einem variablen Stoffstrom 20 zwischen 40 und 60 m³/h. Der mittlere Stoffstrom beträgt ca. 50 m³/h.

### Auslegung:

Ein Schwerstoffabscheider (nicht gezeigt) zur Reinigung der schwerstoffbelasteten Suspension wird mittels Schwerkraft und Regelarmatur 27 kontinuierlich beschickt und hat eine variable Durchsatzleistung von 110 bis 150 m³/h (siehe Fig. 5). Als Vorlagebehälter kommt ein offener, rechteckiger Behälter 22 mit schrägem Unterteil und einem Nutzvolumen von 40 m³ zum Einsatz.

Der obere Bereich des Behälters 22 hat eine Querschnittsfläche von 8 m² (4 m auf 2 m). Der Abzug der Pulpe 25 zur Schwerstoffabscheidung erfolgt am Boden des Behälters 22.

Der Abzug gereinigter Suspension 26 für die nachfolgenden Verfahrensstufen aus dem Vorlagebehälter 22 befindet sich in der oberen Behälterhälfte und erfolgt kontinuierlich mit 50 m³/h.

Der Stoffstrom der abgetrennten Schwerstoffe ist im Vergleich zum Stoffstrom 25 der Zufuhr zum Schwerstoffabscheider sehr klein, so dass in erster Näherung der Stoffstrom 21 des zurückgeführten gereinigten Materials gleich dem Stoffstrom 25 gesetzt werden kann.

### Ausführung:

Der Abzug der gereinigten Suspension 26 für die nachfolgenden Verfahrensstufen mit kontinuierlichen 50 m³/h erfolgt in horizontaler Richtung quer zu dem vertikal gerichteten Stoffstrom von 60 bis 100 m³/h aus der Zone mit gereinigtem Material 29. Die verbleibende Suspensionsmenge aus der Zone mit gereinigtem Material 29 strömt am Durchlass 30 am unteren Ende der Trennwand 23 in die Zone mit ungereinigtem Material 28 (siehe Fig. 6).

Die Zufuhr der ungereinigten Pulpe 20 und die Rückführung des Ablaufs der Schwerstoffabscheidung 21 in den Vorlagebehälter 22 erfolgen auf den Seiten und oberhalb des maximalen Füllstandes auf der jeweiligen Seite der Trennwand (siehe Fig. 5). Die schräg verlaufende Trennwand 23 beginnt oberhalb des maximalen Behälterfüllstands 24 von 40 m³ und reicht bis in den sich verjüngenden Teil des Behälters hinab, wie in Fig. 5 dargestellt ist. Die Trennwand 23 unterteilt auf dem Niveau des maximalen Füllstands die Querschnittsfläche des Behälters (siehe Fig. 6) in eine Fläche A (Bezugszeichen 28) und eine Fläche B (Bezugszeichen 29). Der Zone mit der Querschnittsfläche A (28) wird die ungereinigte Pulpe 20 zugeführt und in die Zone mit der Querschnittsfläche B (29) wird der Ablauf 21 der Schwerstoffabscheidung rückgeführt.

Um bei virtuell geschlossenem Ablauf 30 sicherzustellen, dass bei dem Abzug 26 von 50 m³/h und der minimalen Rückführung 21 von 110 m³/h der Füllstand in der Zone mit der Querschnittsfläche B, in der sich die gereinigte Pulpe 21 befindet, schneller als oder zumindest gleich schnell steigt wie im Bereich mit ungereinigter Pulpe 20 (Zone mit der Querschnittsfläche A) bei maximaler Zufuhr 20 von 60 m³/h, gilt auf dem Niveau des maximalen Füllstands, dem Niveau, auf dem das Verhältnis der beiden Querschnittsflächen A zu B minimal ist: A/B ≥ 1 (A zu B ist größer gleich eins) .

In diesem Fall wird die schräg verlaufende Trennwand derart eingebaut, dass sich eine Querschnittsfläche A (28) von 4 m² und eine Querschnittsfläche B (29) von 4 m² ergibt. Die Trennwand 23 ist so weit nach unten gezogen, dass der freie Querschnitt der Öffnung 30 zum Abfluss von gereinigter Pulpe in den Behälterkonus 0,3 m² beträgt.

### Vorteile

Die erfindungsgemäße Ausführung einer Schwerstoffabtrennung hat den Vorteil, dass beim Einsatz von nur einem Vorlagebehälter und der Rückführung des Ablaufs des Schwerstoffabscheiders in diesen Behälter gereinigtes Material von ungereinigtem Material getrennt gehalten werden kann und kein Kurzschlussstrom von ungereinigtem Material in die nachgeschalteten Verfahrensstufen auftritt. Ferner kann eine mehrfache Rückführung des Ablaufs des Schwerstoffabscheiders realisiert werden.

Ferner werden durch die begünstigte Abtrennung von verbleibenden Feststoffen aus dem Ablauf des Schwerstoffabscheiders in der Zone des gereinigten Materials vermehrt Schwerstoffe zum Schwerstoffabscheider zurückgeführt.

Der Effekt ist jeweils, dass der Abtrenngrad der Schwerstoffe verbessert wird. Dies ermöglicht auch den Einsatz von selektiveren Abscheidern, die sich typischerweise durch einen schlechteren Wirkungsgrad auszeichnen.

Die Erfindung ermöglicht somit hohe Wirkungsgrade mit nur einem Vorlagebehälter und nur einem Schwerstoffabscheider. Dadurch wird der Bedarf an Platz und Armaturen minimiert sowie kurze Rohrleitungslängen und eine günstige Rohrleitungsführung werden ermöglicht. Diese Faktoren bewirken eine Senkung der Kosten bei gleicher Qualität.

Aufgrund der Möglichkeit der Rückführung in den Vorlagebehälter und folglich einer mehrfachen Zufuhr des zu reinigenden Materials kann ein größerer Schwerstoffabscheider zur Wirkungsgradsteigerung eingesetzt werden. Im Vergleich zu zwei in Reihe geschalteten Schwerstoffabscheidern können somit Kosten gesenkt werden.

## Patentansprüche

1. Vorrichtung zur Schwerstoffabtrennung aus einer Suspension, bestehend aus einem Vorlagebehälter (1) und aus einem Schwerstoffabscheider (5), der aus dem Vorlagebehälter beschickbar ist und durch dessen Ablauf (2) gereinigte Suspension wieder in den Vorlagebehälter (1) zurückführbar ist, wobei der Vorlagebehälter (1) ein konisches Unterteil und eine in das konische Unterteil hinabreichende Trennwand (7) besitzt, deren unteres Ende von der zugehörigen Behälterwandung beabstandet ist und **dadurch** einen offenen Durchtritt (11) bildet, auf der einen Seite der Trennwand (7) eine Zone (10) mit einer Zufuhr (3) für ungereinigtes Material (3) und auf der anderen Seite der Trennwand (7) eine Zone (8) mit einer Zufuhr (2) von gereinigtem Material aus dem Schwerstoffabscheider (5) gebildet ist, in der Zone (8) mit gereinigtem Material ein Ablauf (9) zum Abziehen von gereinigtem Material quer zur Hauptströmungsrichtung der Suspension angeordnet ist, und die Trennwand (7) so angeordnet ist, dass in Anbetracht der Stoffströme (2, 3, 4, 9) und aufgrund der Größe des Verhältnisses der Querschnittsflächen auf den beiden Seiten der Trennwand (7) im Betrieb Material durch den offenen Durchtritt (11) aus der Zone (8) mit gereinigtem Material in die Zone (10) mit ungereinigtem Material fließt.

2. Vorrichtung nach Anspruch 1, **dadurch gekennzeichnet, dass** die Trennwand vertikal verläuft.

3. Vorrichtung nach Anspruch 1, **dadurch gekennzeichnet, dass** das ungereinigte Material von oben nahe der Trennwand zuführbar ist.

4. Vorrichtung nach Anspruch 2, **dadurch gekennzeichnet, dass** das ungereinigte Material parallel zur Trennwand zuführbar ist.

5. Vorrichtung nach Anspruch 1, **dadurch gekennzeichnet, dass** die Trennwand schräg verläuft.

6. Vorrichtung nach Anspruch 1, **dadurch gekennzeichnet, dass** die Öffnung zur Beschickung des Schwerstoffabscheiders waagerecht angeordnet ist.

7. Vorrichtung nach Anspruch 7, **dadurch gekennzeichnet, dass** die Zufuhr von ungereinigtem Material und gereinigtem Material in den Vorlagebehälter derart erfolgen kann, dass keine Anströmung der Verbindungsöffnung der beiden Zonen aus der Zone mit ungereinigtem Material erfolgt.

8. Verfahren zur Schwerstoffabtrennung aus einer ungereinigten Suspension, die Schwerstoffe enthält, unter Verwendung einer Vorrichtung nach einem der Ansprüche 1-7 mit den Schritten:
Einleiten (3) der schwerstoffreichen ungereinigten Suspension in eine Zone (10) eines Behälters (1),
Abführen (4) einer schwerstoffhaltigen Suspension aus der Behälterzone (10) und Zuführen der abgeführten Suspension in eine Schwerstoffabscheidung (5),
Rückführen (2) einer schwerstoffarmen gereinigten Suspension aus der Schwerstoffabscheidung zurück zu dem Behälter (1) in eine von der Zone (10) abgetrennte Zone (8) mit einem im Bereich ihres untern Endes offenen Durchtritt (11) zur Zone (10), um diese Zone (8) getrennt (7) von der ungereinigten Suspension und unter weiterer Schwerstoffabtrennung im wesentlichen vertikal zu durchströmen,
Abziehen (9) eines im Wesentlichen schwerstofffreien Suspensionsstroms quer zur im wesentlichen vertikalen Hauptströmungsrichtung der schwerstoffarmen Suspension in der abgetrennten Zone (8), und
Abführen (4) des verbleibenden Teilstroms schwerstoffarmer Suspension aus der Zone (8) vermischt mit dem ungereinigten Stoffstrom aus der Zone (10) des Behälters und Zuführen (4) dieses Stoffstroms zu der Schwerstoffabscheidung (5), wobei zur Steigerung der Abtrennleistung der Stoffstrom mehrfach der Schwerstoffabscheidung (5) zugeführt wird.

## Claims

1. An apparatus for heavy inert separation from a suspension comprising a feed tank (1) and a heavy inert separator (5) for feeding from said feed tank (1) and through the discharge (2) of which cleaned suspension is returnable to said feed tank (1), wherein said feed tank (1) has a conical lower part and a partition (7) downswept into said conical lower part, the lower end of said partition (7) being spaced away from the corresponding tank wall in thus forming an open passage (11), there being formed at the one side of said partition (7) a zone (10) with a feed (3) for uncleaned material (3) and at the other side of said partition (7) a zone (8) with a feed (2) for cleaned material from said heavy inert separator (5), there being arranged in said cleaned material zone (8) a discharge (9) for drawing off cleaned material transversely to the main direction of flow of said suspension and said partition (7) being arranged so that in view of the material flows (2, 3, 4, 9) and due to the dimensioning the ratio of the cross-sectional areas on both sides of said partition (7) material flows in operation through said open passage (11) from the said cleaned material zone (8) into said uncleaned material zone (10).

2. The apparatus as set forth in claim 1, **characterized in that** said partition is oriented vertical.

3. The apparatus as set forth in claim 1, **characterized in that** said uncleaned material can be fed from above in the vicinity of said partition.

4. The apparatus as set forth in claim 2, **characterized in that** said uncleaned material can be fed parallel to said partition.

5. The apparatus as set forth in claim 1, **characterized in that** said partition is oriented slanting.

6. The apparatus as set forth in claim 1, **characterized in that** said port for feeding the heavy inert separator is arranged horizontal.

7. The apparatus as set forth in claim 7, **characterized in that** said feed of uncleaned material and said cleaned material into said feed tank can be achieved such that the port connecting said two zones receives no flow from said uncleaned material zone.

8. A method for heavy inert separation from an uncleaned suspension containing heavy inerts in making use of an apparatus as set forth in any of the claims 1-7, comprising the steps:
feeding (3) an uncleaned suspension highly laden with heavy inerts into a zone (10) of a tank,
discharging (4) a suspension laden with heavy inerts from said tank zone (10) and feeding said discharged suspension into a heavy inert separator (5),
returning (2) a cleaned suspension lightly laden with heavy inerts from said heavy inert separator back to said tank (1) into a zone (8) separated from said zone (10) with a passage (11) open in the region of its lower end to said zone (10) to pass through said zone (8) separate (7) from said uncleaned suspension and with further heavy inert separation substantially vertically,
drawing off (9) a suspension flow substantially free of heavy inerts transversely to the main direction of flow of said suspension lightly laden with heavy inerts in said separate zone (8),and
discharging (4) a remaining partial flow of suspension lightly laden with heavy inerts from said zone (8) mixed with said uncleaned material flow from said zone (10) of said tank and feeding (4) this material flow to said heavy inert separator (5), said material flow being fed multiply to said heavy inert separator (5) to boost the separation capacity.

## Revendications

1. Procédé de séparation de particules lourdes se trouvant dans une suspension, comportant un récipient collecteur (1) et un séparateur de particules lourdes (5), pouvant être alimenté à partir du récipient collecteur et par l'écoulement duquel (2) la suspension épurée peut être à nouveau réacheminée dans le récipient collecteur (1), le récipient collecteur (1) possédant une partie inférieure conique et une paroi (7) s'étendant jusqu'à la partie inférieure conique, dont l'extrémité inférieure est à distance de la paroi du récipient correspondant et formant ainsi un passage ouvert (11), une zone (10) avec un acheminement (3) destiné à la matière non épurée (3) étant formée sur un côté de la paroi (7) et une zone (8) avec un acheminement (2) de matière épurée provenant de l'extracteur de particules lourdes (5) étant formée sur l'autre côté de la paroi (7), un écoulement (9) destiné à prélever la matière épurée transversalement au sens d'écoulement principal de la suspension étant disposé dans la zone (8) comportant la matière épurée, et la paroi (7) étant disposée de telle sorte que, en considération des flux de particules (2, 3, 4, 9) et en raison de la grandeur du rapport des aires de section sur les deux côtés de la paroi (7), en fonctionnement, la matière circule par le passage ouvert (11) hors de la zone (8) comportant la matière épurée vers la zone (10) comportant la matière non épurée.

2. Dispositif selon la revendication 1,
**caractérisé par le fait que** la paroi de séparation est disposée à la verticale.

3. Dispositif selon la revendication 1,
**caractérisé par le fait que** la matière non épurée peut être acheminée par le haut près de la paroi.

4. Dispositif selon la revendication 2,
**caractérisé par le fait que** la matière non épurée peut être acheminée parallèlement à la paroi.

5. Dispositif selon la revendication 1,
**caractérisé par le fait que** la paroi de séparation est de forme oblique.

6. Dispositif selon la revendication 1,
**caractérisé par le fait que** l'orifice destiné à l'alimentation du séparateur de particules lourdes est disposé à l'horizontale.

7. Dispositif selon la revendication 7,
**caractérisé par le fait que** l'acheminement de matière non épurée et de matière épurée dans le récipient collecteur peut s'effectuer de telle manière qu'aucun afflux de l'orifice de liaison entre les deux zones ne s'effectue à partir de la zone comportant la matière non épurée.

8. Procédé de séparation de particules lourdes se trouvant dans une suspension non épurée chargée de particules lourdes, en utilisant un dispositif selon une des revendications 1 à 7 comportant les étapes suivantes :
introduction (3) de la suspension non épurée à forte teneur en particules lourdes dans une zone (10) d'un récipient (1),
évacuation (4) d'une suspension contenant des particules lourdes hors de la zone du récipient (10) et acheminement de la suspension évacuée dans un extracteur de particules lourdes (5),
réacheminement (2) d'une suspension épurée à faible teneur en particules lourdes après l'extraction de particules lourdes à nouveau vers le récipient (1) dans une zone (8) séparée de la zone (10) possédant un passage ouvert (11) du côté de son extrémité inférieure vers la zone (10), afin de traverser essentiellement à la verticale cette zone (8) séparée (7) de la suspension non épurée en se soumettant à une séparation de particules lourdes supplémentaire,
prélèvement (9) d'un flux de suspension essentiellement exempt de particules lourdes transversalement au sens d'écoulement principal sensiblement vertical de la suspension à teneur réduite en particules lourdes dans la zone séparée (8), et
évacuation (4) du flux partiel résiduel de suspension à teneur réduite en particules lourdes hors de la zone (8) mélangé au flux de particules non épuré hors de la zone (10) du récipient et acheminement (4) de ce flux de particules jusqu'à l'extraction de particules lourdes (5), le flux de particules étant soumis plusieurs fois à l'extraction de particules lourdes (5) afin d'augmenter l'efficacité de rétention.
